(19) Europäisches Patentamt
European Patent Office
Office européen des brevets

(11) **EP 2 086 190 B1**

(12) **EUROPEAN PATENT SPECIFICATION**

(45) Date of publication and mention
of the grant of the patent:
**24.07.2019 Bulletin 2019/30**

(51) Int Cl.:
*H04L 25/02* (2006.01)  *H04L 27/26* (2006.01)
*H04L 25/03* (2006.01)  *H04J 11/00* (2006.01)

(21) Application number: **08155658.1**

(22) Date of filing: **05.05.2008**

(54) **Method for determining system information as well as terminal and computer program**

Verfahren zur Festlegung von Systeminformationen sowie Endgerät und Computerprogramm

Procédé pour déterminer les informations d'un système, terminal et programme informatique

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **29.01.2008 US 24419 P**

(43) Date of publication of application:
**05.08.2009 Bulletin 2009/32**

(73) Proprietor: **Telefonaktiebolaget LM Ericsson
(publ)
164 83 Stockholm (SE)**

(72) Inventors:
 • **Lindoff, Bengt**
   **237 36 Bjärred (SE)**
 • **Lincoln, Bo**
   **227 30 Lund (SE)**
 • **Rydén, Tobias**
   **224 56 Lund (SE)**

(74) Representative: **Brann AB
P.O. Box 3690
Drottninggatan 27
103 59 Stockholm (SE)**

(56) References cited:
WO-A-02/093859   WO-A-2007/106980
WO-A-2008/103317   WO-A-2008/115588
US-A1- 2004 085 892   US-A1- 2007 047 433
US-A1- 2007 147 533

• **MOTOROLA: "Proposal for Dedicated Pilots in
Downlink Precoding for EUTRA MIMO" 3RD
GENERATION PARTNERSHIP PROJECT (3GPP);
TECHNICALSPECIFICATION GROUP (TSG)
RADIO ACCESS NETWORK (RAN);
WORKINGGROUP 1 (WG1), MEETING #48, 3 GPP
TSG RAN WG1 MEETING #48 ST. LOUIS,, [Online]
vol. R1-070770, no. 48, 12 February 2007
(2007-02-12), pages 1-5, XP002494688 Retrieved
from the Internet:
URL:http://www.3gpp.org/ftp/tsg_ran/WG1_RL
1/TSGR1_48/Docs/R1-070770.zip> [retrieved on
2007-02-12]**

**Description**

Technical field

The present invention relates to a method for determining system information, and a decoder for performing it, a terminal including such a decoder, and a computer program for implementing the method.

Background

In the forthcoming evolution of mobile cellular standards like GSM and WCDMA, new transmission techniques like OFDM will be used. Furthermore, in order to have a smooth migration from existing cellular systems to high capacity high data rate systems in existing radio spectrum, new systems must be able to operate in a flexible bandwidth. A proposal for such a new flexible cellular system is 3G Long Term Evolution (3G LTE) that can be seen as an evolution of the 3G WCDMA standard. This system will use OFDM as multiple access technique (called OFDMA) in the downlink and will be able to operate on bandwidths ranging from 1.25 MHz to 20 MHz. Another important aspect of LTE is the mobility function, hence synchronization symbols and cell search procedures are of major importance in order for a terminal operating in the system to detect and synchronize with other cells.

For mobility reasons the terminal needs to read system information from cells, e.g. serving cell and neighbouring cells, prior to handover, in order to collect necessary information as to be able to connect to that other cell. The problem is that the neighbouring cell typically is weaker than the serving cell and hence the detection of broadcast information needs to be done at signal-to-interference ratios (SIRs) below 0 dB. Furthermore, in LTE, reference symbols (RS) are sparse, which makes channel estimation, especially at low SIR, a non-trivial task. This in turn causes the detection of broadcast system information, e.g. the primary broadcast channel (P-BCH), to have quite low performance.

Therefore there is a need for method and apparatus for improving the channel estimates in systems like the LTE to enable acquisition of system information from cells.

WO 2007/106980 discloses determining pre-coding codeword by performing channel estimation using pre-coded pilots to produce channel estimates, and using known contents of a beacon pilot vector and the channel estimates to determine which codeword that was used. In particular, there is disclosed receiver components for performing beacon pilot extraction and precoding matrix detection, and a component for channel estimation and channel reconstruction. Outputs of the channel estimation component and the precoding matrix detection component are input to a component for differential codebook index search which generates feedback that is sent back to the transmitter.

MOTOROLA: "Proposal for Dedicated Pilots in Downlink Precoding for EUTRA MIMO", contribution to 3rd Generation Partnership Project, Technical Specification Group Radio Access Network Working Group 1, meeting #48, 12 February 2007, discloses use of dedicated pilots to signal codebook weight factors and at each end of resource blocks to reduce channel estimation errors. In particular, it is disclosed that the UE measures the downlink channel to each antenna using pilots in the reference signal. The UE determines the best codebook vectors for each data stream or best codebook matrix for all data streams on each resource block that the Node B requests. The UE signals the codebook vectors or index of the codebook matrix for all data streams on each resource block to the Node B. The Node B receives the indices of the code book vector or index of the codebook matrix from the UEs. The Node B uses the codebook vectors or matrix to separately precode each resource block. Dedicated pilots are precoded along with the data on each resource block. The dedicated pilots are used to signal the codebook weight vectors or matrix the Node B uses on each resource block or group of resource blocks to the UE. The UE estimates the channel to each transmit antenna using the common pilots, and uses the received dedicated pilots and the estimated channel to ach antenna to determine which codebook weight vectors or codebook matrix the Node B used on each resource block. The UE uses the estimated channel to each antenna and the estimated codebook weight vectors or matrix to determine the composite channel(s). The UE decodes its data using the composite channel(s).

Summary

An objective of the invention is therefore to overcome or at least reduce the stated problems. The present invention is based on the understanding that utilising that the synchronization channels can be known to the terminal at the time of doing detection of broadcasted system information, and they can hence be used as additional reference symbols in the channel estimation process, if their pre-coding can be determined. The inventors have found that once the terminal knows the pre-coding used for the synchronization symbol transmission, the information of these can be used for extending the channel model and hence also the use of synchronization symbols in the channel estimation process. Using this, improved channel estimates can be obtained to significantly improve the detector performance, especially when detecting the broadcast system information during the initial cell search procedure in systems like LTE. The present invention thus gives approaches for estimating used pre-coding.

The invention is solely defined by the appended claims. In the following, references to embodiments not falling within the scope of the claims are to be understood as examples useful for understanding the invention.

According to a first aspect of the invention, there is provided a method for a terminal of a cellular telecommunication system for determination of information about a node of a network of the cellular telecommunication system, the cellular telecommunication system enabling the determination of the information by the terminal from system information transmitted from at least one cell operated by the network node, where the cellular telecommunication system employs Orthogonal Frequency Division Multiple Access, the method comprising: receiving, a transmission signal and the system information, from a network node of the at least one cell, where the received transmission signal comprises reference symbols and synchronisation symbols; estimating, for each transmit antenna of the network node, a preliminary channel estimate based on the received reference symbols; estimating a pre-coding vector, being associated with transmission by at least one transmit antenna of the network node of the at least one cell, for the received synchronisation symbols, where estimating the pre-coding vector comprises: estimating an aggregate channel for the synchronisation symbols being sent on each transmit antenna of the network node; and determining the pre-coding vector to be the one best matching a linear combination of the preliminary channel estimates and the pre-coding vector with the estimated aggregate channel; re-estimating a channel estimate for each transmit antenna of the network node based on the received reference symbols, a reference symbol model defined for the received reference symbols, the received synchronisation symbols, the estimated pre-coding vector, and a synchronisation symbol model defined for the received synchronisation symbols; and decoding the received system information using the re-estimated at least one channel estimate.

The estimation of the pre-coding vector may comprise: estimating an aggregate channel for the synchronisation symbols being sent on each transmit antenna of the network node using the respective pre-coding vector; and determining the pre-coding vector to be the one best matching a linear combination of the preliminary channel estimates and the pre-coding vector with the aggregate channel estimate.

The determination of the pre-coding vector to be the one best matching the linear combination may comprise: measuring a distance between the linear combination of the preliminary channel estimates and the pre-coding vector, and the aggregate channel estimate. The distance may be calculated by:

$$\sum_{k=1}^{K}\left|\hat{h}^{(k,SCH)} - \left(a_1\hat{h}^{(k,1)} + \cdots + a_R\hat{h}^{(k,R)}\right)\right|^2$$

where $K$ is the number of blocks, $R$ is the number of used transmit antennas, $\hat{h}^{(k,SCH)}$ with superscript $SCH$ are elements of the aggregate channel estimate, $a_i$, $i=1...R$, are elements of the pre-coding vector, and $\hat{h}^{(k,j)}$, $j=1...R$, are elements of the preliminary channel estimates. A block is a transmitted/received information unit over which channel coefficients are assumed essentially constant.

According to an example, the estimation of the preliminary channel estimates and estimation of the pre-coding vector may comprise: determining a joint log-likelihood of the received reference symbols and the received synchronisation symbols; and maximising the joint log-likelihood of the received reference symbols and the received synchronisation symbols with respect to the preliminary channel estimates, where the pre-coding vector providing the maximal joint log-likelihood of the received reference symbols and the received synchronisation symbols is the estimated pre-coding vector. The joint log-likelihood of the received reference symbols and the received synchronisation symbols may be:

$$-N\log(\pi\sigma^2) - \frac{1}{\sigma^2}\sum_{r=1}^{R}\sum_{k=1}^{K}\sum_{i=1}^{p^{(r)}}\left|y_i^{(k,r)} - s_i^{(k,r)}h^{(k,r)}e^{jd_i^{(r)}\Delta}\right|^2 - \frac{1}{\sigma^2}\sum_{k=1}^{K}\sum_{i=1}^{p^{(SCH)}}\left|y_i^{(k,SCH)} - s_i^{(k,SCH)}\left(\sum_{r=1}^{R}a_r h^{(k,r)}\right)e^{jd_i^{(SCH)}\Delta}\right|^2$$

where $N$ is the total number of symbols, $\sigma^2$ is the variance of additive complex Gaussian noise, $K$ is the number of blocks, $R$ is the number of used transmit antennas, $p^{(r)}$ is the number of reference symbols from antenna $r$ in each block, $y_i^{(k,r)}$ is received reference symbol at position of $s_i^{(k,r)}$, $s_i^{(k,r)}$ is value of $i^{th}$ transmitted reference symbol from antenna $r$ in block $k$, $h^{(k,r)}$ are channel coefficients, $d_i^{(r)}$ is relative position between reference symbol $i$ and synchronisation symbol from antenna $r$, $a_r$ is element of the pre-coding vector, $\Delta$ is frequency error, $p^{(SCH)}$ is the number of synchronisation symbols in each block, $y_i^{(k,SCH)}$ is received synchronisation symbol at position of $s_i^{(k,SCH)}$, $s_i^{(k,SCH)}$ is value of $i^{th}$ transmitted synchronisation symbol in block $k$, and $d_i^{(SCH)}$ is relative position between synchronisation symbol $i$ and reference symbol. The maximization of the joint log-likelihood of the received reference symbols and the received synchronisation symbols with respect to the preliminary channel estimates may comprise: minimising

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)}\times e^{-jd_i^{(r)}\Delta}-h^{(k,r)}\right|^2+\sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta}-\sum_{r=1}^{R}a_r h^{(k,r)}\right|^2$$

where $K$ is the number of blocks, $R$ is the number of used transmit antennas, $p^{(r)}$ is number of reference symbols from antenna $r$ in each block, $s_i^{(k,r)}$ is value of $i^{th}$ transmitted reference symbol from antenna $r$ in block $k$, $y_i^{(k,r)}$ is received reference symbol at position of $s_i^{(k,r)}$, $h^{(k,r)}$ are channel coefficients, $d_i^{(r)}$ is relative position between reference symbol $i$ and synchronisation symbol from antenna $r$, $p^{(SCH)}$ is the number of synchronisation symbols in each block, $s_i^{(k,SCH)}$ is value of $i^{th}$ transmitted synchronisation symbol in block $k$, $y_i^{(k,SCH)}$ is received synchronisation symbol at position of $s_i^{(k,SCH)}$, $d_i^{(SCH)}$ is relative position between synchronisation symbol $i$ and reference symbol, $a_r$ is element of the pre-coding vector, and $\Delta$ is frequency error.

The method may further comprise: estimating a frequency error by optimising a channel estimate function with respect to the frequency error, where the optimal frequency error is determined to be the estimated frequency error, such that receiving the transmission signal comprises compensating frequency based on the estimated frequency error. Here, the channel estimate function may comprise:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)}\times e^{-jd_i^{(r)}\Delta}-h^{(k,r)}\right|^2+\sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta}-\sum_{r=1}^{R}a_r h^{(k,r)}\right|^2$$

where $K$ is the number of blocks, $R$ is the number of used transmit antennas, $p^{(r)}$ is number of reference symbols from antenna $r$ in each block, $s_i^{(k,r)}$ is value of $i^{th}$ transmitted reference symbol from antenna $r$ in block $k$, $y_i^{(k,r)}$ is received reference symbol at position of $s_i^{(k,r)}$, $h^{(k,r)}$ are channel coefficients, $d_i^{(r)}$ is relative position between reference symbol $i$ and synchronisation symbol from antenna $r$, $p^{(SCH)}$ is number of synchronisation symbols in each block, $s_i^{(k,SCH)}$ is value of $i^{th}$ transmitted synchronisation symbol in block $k$, $y_i^{(k,SCH)}$ is received synchronisation symbol at position of $s_i^{(k,SCH)}$, $d_i^{(SCH)}$ is relative position between synchronisation symbol $i$ and reference symbol, $a_r$ is element of the pre-coding vector, and $\Delta$ is frequency error.

The channel estimate function may be optimised with respect to any parameter, or set of parameters, contained thereof.

The method may further comprise: estimating, a lower bound on a number of transmit antennas used by the network node, by determining the highest index of the non-zero elements of the pre-coding vector to be a lower bound.

According to a second aspect, there is provided a computer program comprising computer executable instructions causing a processor, when executed thereon, to perform the method according to the first aspect.

According to a third aspect, there is provided a terminal for a cellular telecommunication system in which system information is provided from a network of the cellular telecommunication system, the cellular telecommunication system enabling determination of information by the terminal from the system information transmitted from at least one cell, where the cellular telecommunication system employs Orthogonal Frequency Division Multiple Access, the terminal comprising a decoder. The decoder comprises: a receiver arranged to receive, a transmission signal and the system information, from a network node of the at least one cell, where the received transmission signal comprises reference symbols and synchronisation symbols; a pre-coding vector estimator arranged to estimate a pre-coding, vector being associated with transmission by at least one transmit antenna of the network node of the at least one cell, for the received synchronisation symbols; and a channel estimator arranged to provide a preliminary channel estimate, for each transmit antenna of the network node, based on the received reference symbols, and a final channel estimate for each transmit antenna of the network node based on the received reference symbols, a reference symbol channel model defined for the received reference symbols, the received synchronisation symbols, the estimated pre-coding vector, and a synchronisation symbol channel model defined for the received synchronisation symbols, where the decoder is enabled to decode the received system information using the re-estimated at least one channel estimate, and where the pre-coding vector estimator is further arranged to: estimate an aggregate channel for the synchronisation symbols being sent on each transmit antenna of the network node; and determine the pre-coding vector to be the one best matching a linear combination of the preliminary channel estimates and the pre-coding vector with the estimated aggregate channel.

The pre-coding vector estimator may be further arranged to: estimate an aggregate channel for the synchronisation symbols being sent on each transmit antenna of the network node using the respective pre-coding vector; and determine the pre-coding vector to be the one best matching a linear combination of the preliminary channel estimates and the pre-coding vector with the aggregate channel estimate.

The pre-coding vector best matching may be the one with a minimum distance between the linear combination of the preliminary channel estimates and the pre-coding vector, and the aggregate channel estimate. A distance may be calculated as:

$$\sum_{k=1}^{K} \left| \hat{h}^{(k,SCH)} - \left( a_1 \hat{h}^{(k,1)} + \cdots + a_R \hat{h}^{(k,R)} \right) \right|^2$$

where $K$ is the number of blocks, $R$ is the number of used transmit antennas, $\hat{h}^{(k,SCH)}$ with superindex $SCH$ are elements of the aggregate channel estimate, $a_i$, $i=1...R$, are elements of the pre-coding vector, and $\hat{h}^{(k,j)}$, $j=1...R$, are elements of the preliminary channel estimates.

According to an example, the pre-coding vector estimator and channel estimator may be further arranged to: apply each preliminary channel estimates for the received reference symbols and the received synchronisation symbols; determine a joint log-likelihood of the received reference symbols and the received synchronisation symbols; and maximise the joint log-likelihood of the received reference symbols and the received synchronisation symbols with respect to the preliminary channel estimates, where the pre-coding vector providing the maximal joint log-likelihood of the received reference symbols and the received synchronisation symbols is the estimated pre-coding vector. The joint log-likelihood of the received reference symbols and the received synchronisation symbols may be:

$$-N \log(\pi\sigma^2) - \frac{1}{\sigma^2} \sum_{r=1}^{R} \sum_{k=1}^{K} \sum_{i=1}^{p^{(r)}} \left| y_i^{(k,r)} - s_i^{(k,r)} h^{(k,r)} e^{j d_i^{(r)} \Delta} \right|^2 - \frac{1}{\sigma^2} \sum_{k=1}^{K} \sum_{i=1}^{p^{(SCH)}} \left| y_i^{(k,SCH)} - s_i^{(k,SCH)} \left( \sum_{r=1}^{R} a_r h^{(k,r)} \right) e^{j d_i^{(SCH)} \Delta} \right|^2$$

where $N$ is the total number of symbols, $\sigma^2$ is the variance of additive complex Gaussian noise, $K$ is the number of blocks, $R$ is the number of used transmit antennas, $p^{(r)}$ is the number of reference symbols from antenna $r$ in each block, $y_i^{(k,r)}$ is received reference symbol at position of $s_i^{(k,r)}$, $s_i^{(k,r)}$ is value of $i^{th}$ transmitted reference symbol from antenna $r$ in block $k$, $h^{(k,r)}$ are channel coefficients, $d_i^{(r)}$ is relative position between reference symbol $i$ and synchronisation symbol from antenna $r$, $a_r$ is element of the pre-coding vector, $\Delta$ is frequency error, $p^{(SCH)}$ is number of synchronisation symbols in each block, $y_i^{(k,SCH)}$ is received synchronisation symbol at position of $s_i^{(k,SCH)}$, $s_i^{(k,SCH)}$ is value of $i^{th}$ transmitted synchronisation symbol in block $k$, and $d_i^{(SCH)}$ is relative position between synchronisation symbol $i$ and reference symbol. The maximal joint log-likelihood of the received reference symbols and the received synchronisation symbols with respect to the preliminary channel estimates may be provided by the minimum of:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)}\times e^{-jd_i^{(r)}\Delta}-h^{(k,r)}\right|^2+\sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta}-\sum_{r=1}^{R}a_r h^{(k,r)}\right|^2$$

where $K$ is the number of blocks, $R$ is the number of used transmit antennas, $p^{(r)}$ is number of reference symbols from antenna $r$ in each block, $s_i^{(k,r)}$ is value of $i^{th}$ transmitted reference symbol from antenna $r$ in block $k$, $y_i^{(k,r)}$ is received reference symbol at position of $s_i^{(k,r)}$, $h^{(k,r)}$ are channel coefficients, $d_i^{(r)}$ is relative position between reference symbol $i$ and synchronisation symbol from antenna $r$, $p^{(SCH)}$ is number of synchronisation symbols in each block, $s_i^{(k,SCH)}$ is value of $i^{th}$ transmitted synchronisation symbol in block $k$, $y_i^{(k,SCH)}$ is received synchronisation symbol at position of $s_i^{(k,SCH)}$, $d_i^{(SCH)}$ is relative position between synchronisation symbol $i$ and reference symbol, $a_r$ is element of the pre-coding vector, and $\Delta$ is frequency error, and where the pre-coding vector estimator is arranged to find this minimum.

The decoder may further comprise: a frequency error estimator arranged to optimise a channel estimate function with respect to a frequency error, where an optimal frequency error is determined to be the estimated frequency error, where the estimated frequency error is provided to the receiver such that the receiver is enabled to correct the frequency error. The channel estimate function may be:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)}\times e^{-jd_i^{(r)}\Delta}-h^{(k,r)}\right|^2+\sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta}-\sum_{r=1}^{R}a_r h^{(k,r)}\right|^2$$

where $K$ is the number of blocks, $R$ is the number of used transmit antennas, $p^{(r)}$ is number of symbols from antenna $r$ in each block, $h^{(k,r)}$ are channel coefficients, $d_i^{(r)}$ is relative position between reference symbol $i$ and synchronisation symbol from antenna $r$, $a_r$ is element of the pre-coding vector, and $\Delta$ is frequency error,

where optimisation is performed with respect to $\Delta$.

The decoder may further comprise: an estimator for determining a lower bound of a number of transmit antennas used by the network node, where the estimator is arranged to determine the highest index of the non-zero elements of the pre-coding vector to be a lower bound.

The terminal may be arranged to perform handover based on the received system information.

An advantage of an embodiment of the invention is that an improved channel estimate can be provided, which can improve decoding of system information.

An advantage of an embodiment of the invention is that frequency error of the receiver can be estimated such that it can be compensated for.

An advantage of an embodiment of the invention is that a lower bound of the number of transmit antennas used can be estimated.

An advantage of an embodiment of the invention is that handover can be improved because of improved system information reception.

Further advantages will be recognised when reading the detailed description, taking into consideration what is illustrated in the accompanying drawings.

Brief description of drawings

Fig. 1 schematically illustrates an example of transmitted signals used for improved channel estimation.
Fig. 2 is a flow chart illustrating a method according to an embodiment of the present invention.
Fig. 3 is a flow chart illustrating a method according to an embodiment of the present invention.

Fig. 4 is a flow chart illustrating a method according to an embodiment of the present invention.

Fig. 5 is a block diagram schematically illustrating a decoder according to an embodiment of the present invention.

Fig. 6 is a block diagram schematically illustrating a terminal according to an embodiment of the invention.

Fig. 7 schematically illustrates a computer readable media comprising a computer program for implementing a method according to any embodiment of the present invention.

Detailed description

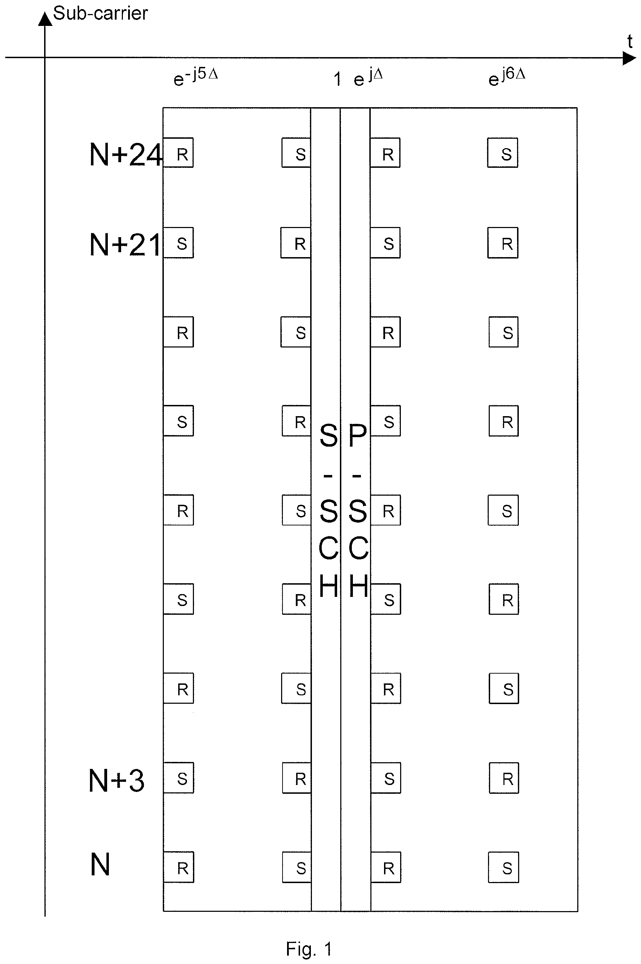

Fig. 1 schematically illustrates an example of transmitted signals used for improved channel estimation. In detail, Fig. 1 shows a time-frequency pattern for a reference symbol from a first R and potential second antenna S in LTE. In LTE, up to four transmit antennas can be used by the network node. Also synchronisation signals P-SyS and S-SyS, transmitted on middle 62 sub-carriers every 5 ms in sub-frames 0 and 5, are shown in Fig. 1. Once a cell identity is known to the mobile terminal, the P-SyS and S-SyS symbols are also known, and can hence be used as additional reference symbols. A pre-coding scheme for the synchronization signals, i.e. how P-SyS and S-SyS are transmitted from the transmitter antennas of a network node, is employed, at least when multiple transmit (TX) antennas are used by the network node, to avoid degradation of the aggregate transmitted signal.

In the given example, an $i$th received reference symbol $y_i$ received from the first antenna, which transmitted symbol $r_i$, will be given by $y_i = h_i^1 r_i + e_i$, where $h_i^1$ is the channel from the first antenna to the receiver, and $e_i$ is introduced noise. Similarly, an $i$th received reference symbol $y_i$ received from the second antenna, which transmitted symbol $s_i$, will be given by $y_i = h_i^2 s_i + e_i$, where $h_i^2$ is the channel from the second antenna to the receiver, and $e_i$ is introduced noise. For the synchronisation symbols, an $i$th received synchronisation symbol $y_i$ received from the antennas, which transmitted symbol $p_i$, will be given by $y_i = h_i^3 p_i + e_i$, where $h_i^3$ is the channel from the antennas to the receiver, and $e_i$ is introduced noise. Since pre-coding is used for the synchronisation signals transmitted by the two antennas, which each have channels according to what has been demonstrated for the reference symbols above,

$$y_i = h_i^3 p_i + e_i = (a_i h_i^1 + a_2 h_i^2) p_i + e_i$$

where $a_1$ and $a_2$ are the pre-coding for the two transmit antennas.

The idea of the invention is to detect the pre-coding vector $A$ used for transmitting synchronisation symbols, e.g. the primary and secondary synchronisation signals (P-SyS and S-SyS) in LTE, in case that more than one TX antenna is used. The channels are estimated using the reference symbols (RS) transmitted from the respective TX antennas, giving a first and second channel estimate (assuming two TX antennas). Then, according to an embodiment, a third channel estimate can be determined for the P/S-SyS and based on a channel model and the first, second and third channel estimate, the pre-coding used for P/S-SyS is estimated. Alternatively, no explicit estimation of the third channel estimate is made. Instead, a signal model, joint log-likelihood, is applied. Then, for each element in a finite set of pre-coding vectors $A$, the maximum likelihood $M_i$ is derived. Then the maximum over the finite set of $M_i$ is derived, giving an estimate of the pre coding vector $A=(a1,a2,...)$. Optionally, a frequency error estimate $\Delta$ is also determined. Then, an updated first and second channel estimate is determined and the new channel estimates are used for detecting the signal. The optional frequency error estimate $\Delta$ can be used for frequency adjustment. In another embodiment of the invention, also a lower bound of the number of TX antennas used by the network node can be estimated.

Using the above proposed pre-coding detection approach makes it possible to improve the channel estimates which in turn improves the detector performance, especially when detecting broadcast system information, e.g. the Primary Broadcast Channel (PBCH) in the initial cell search procedure in LTE.

For the understanding of the principle, a first scheme, in which the channel from each antenna is estimated separately, including also the channel associated with the combined port transmitting the synchronization signals, is considered. Thereafter, based on these estimates, the pre-coding vector of coefficients $a_i$ is estimated by finding the best match of a linear combination of the separately estimated antenna ports to an aggregate estimate of a synchronization signal port.

We assume that the sub-carriers are divided into $K$ blocks of $M$ sub-carriers each. Within each such block, the complex channel coefficients is assumed constant across the sub-carriers and time. We also assume $R$ antennas; in practice $R=2$ or $R=4$, since in the case $R=1$ the synchronization signals must be sent on that single antenna. We introduce the following notation:

$p^{(r)}$ : number of reference signals from antenna $r$ in each block
$d_i^{(r)}$ : position, in units of OFDM symbols, of the $i$th RS from antenna $r$, relative to the S-SCH symbol
$h^{(k,r)}$ : complex channel coefficient at S-SCH symbol in block $k$, from antenna port $r$
$s_i^{(k,r)}$ : value of the $i$th (transmitted) RS from antenna $r$ in block $k$
$y_i^{(k,r)}$ : received signal at the position of $s^{(k,r)}{}_i$
$A = (a_1, a_2, ..., a_R)$ : The TX antenna pre-coding vector used for P-SyS and S-SyS.

Also the combined port associated with the synchronization signals can be formulated in this framework, but then the variables refer to synchronization signals rather than reference symbols. We indicate this thought antenna port by writing $r$ =SCH.

Now consider estimation of the channel using reference symbols from antenna $r$ (or synchronization signals when $r$ =SCH). Assuming that each transmitted signal is multiplied by the complex channel coefficient and then disturbed by additive complex Gaussian noise, independent across symbols in frequency and time and with variance $\sigma^2$, the log-likelihood for those reference symbols received from the $r$th antenna is

$$-(Kp^{(r)})\log(\pi\sigma^2) - \frac{1}{\sigma^2}\sum_{k=1}^{K}\sum_{i=1}^{p^{(r)}}\left|y_i^{(k,r)} - s_i^{(k,r)}h^{(k,r)}e^{jd_i^{(r)}\Delta}\right|^2$$

Viewing the frequency error $\Delta$ as fixed for a moment, estimation of the channel coefficients $h^{(k,r)}$ thus amounts to minimizing

$$QQ^{(r)} = \sum_{k=1}^{K}\sum_{i=1}^{p^{(r)}}\left|y_i^{(k,r)} - s_i^{(k,r)}h^{(k,r)}e^{jd_i^{(r)}\Delta}\right|^2 = \sum_{k=1}^{K}\sum_{i=1}^{p^{(r)}}\left|s_i^{(k,r)}\right|^2\left|y_i^{(k,r)}/s_i^{(k,r)} \times e^{-jd_i^{(r)}\Delta} - h^{(k,r)}\right|^2$$

with respect to these coefficients, where overlining denotes complex conjugation. We see that the resulting estimates are given by

$$\hat{h}^{(k,r)}(\Delta) = \sum_{i=1}^{p^{(r)}} w_i^{(k,r)} y_i^{(k,r)}/s_i^{(k,r)} \times e^{-jd_i^{(r)}\Delta},$$

where the weights $w_i^{(k,r)} = \left|s_i^{(k,r)}\right|^2 / \sum_{l=1}^{p^{(r)}}\left|s_l^{(k,r)}\right|^2.$

Moreover, with $x_i^{(k,r)} = y_i^{(k,r)}/s_i^{(k,r)} \times e^{-jd_i^{(r)}\Delta}$ and $C^{(k,r)} = \sum_{l=1}^{p^{(r)}}\left|s_l^{(k,r)}\right|^2,$ the minimum of the $k$th inner sum is given by

$$C^{(k,r)}\left(\sum_{i=1}^{p^{(r)}} w_i^{(k,r)}\,|\,x_i^{(k,r)}\,|^2 - \left|\sum_{i=1}^{p^{(r)}} w_i^{(k,r)} x_i^{(k,r)}\right|^2\right).$$

Here the first inner sum does not depend on $\Delta$, so we define

$$QQ_{\min}^{(r)}(\Delta) = -\sum_{k=1}^{K} C^{(k,r)} \left| \sum_{i=1}^{p^{(r)}} w_i^{(k,r)} y_i^{(k,r)} / s_i^{(k,r)} \times e^{-jd_i^{(r)}\Delta} \right|^2.$$

An estimate of $\Delta$ can be found by minimizing the sum of all $QQ^{(r)}_{\min}(\Delta)$ over all r, including the synchronization port ($r$ =SCH), with respect to $\Delta$. In general there is no closed-form expression for the minimizer, so that the minimization has to be carried out either by iterative numerical search, or approximately by searching over a finite grid of values. In either case, by inserting the obtained minimum into the above formula for $\hat{h}^{(k,r)}(\Delta)$, a final estimate $\hat{h}^{(k,r)}$ of $h^{(k,r)}$ is obtained.

At this point it can be discriminated between alternatives for the pre-coding vector $A = (a_1, a_2, ..., a_R)$ by measuring the distance between $a_1\hat{h}^{(k,1)} + \cdots + a_R\hat{h}^{(k,R)}$ and $\hat{h}^{(k,SCH)}$, with superindex SCH indicating the estimate for the thought synchronization signal antenna port. One such distance function is

$$\sum_{k=1}^{K} \left| \hat{h}^{(k,SCH)} - \left( a_1\hat{h}^{(k,1)} + \cdots + a_R\hat{h}^{(k,R)} \right) \right|^2$$

There can also be considered weighted versions, for instance with a weight for block $k$ being $|\hat{h}^{(k,1)}|^2 + \cdots + |\hat{h}^{(k,R)}|^2$, so that blocks with larger power are given higher weights.

Finally, after a hard decision about which vector A was used for transmitting the synchronization signals, the procedure can go back and use this decision to carry out a refined channel estimation for each antenna involved in the transmission of synchronization signals.

For further understanding of the principle, in a second scheme we do not, as in the first one, estimate the thought channel over which the synchronization signals are transmitted, but rather estimate all channel coefficients jointly based on all information from reference symbols and synchronization symbols. The joint log-likelihood of all received signals (over all blocks and antennas) is

$$-N\log(\pi\sigma^2) - \frac{1}{\sigma^2}\sum_{r=1}^{R}\sum_{k=1}^{K}\sum_{i=1}^{p^{(r)}} \left| y_i^{(k,r)} - s_i^{(k,r)} h^{(k,r)} e^{jd_i^{(r)}\Delta} \right|^2 - \frac{1}{\sigma^2}\sum_{k=1}^{K}\sum_{i=1}^{p^{(SCH)}} \left| y_i^{(k,SCH)} - s_i^{(k,SCH)} \left( \sum_{r=1}^{R} a_r h^{(k,r)} \right) e^{jd_i^{(SCH)}\Delta} \right|^2$$

where $N$ is the total number of signals (reference symbols and synchronization symbols) involved. Just as for the previous scheme we see that for a fixed pre-coding vector $A$ and a fixed frequency error $\Delta$, maximization of this log-likelihood with respect to the $h^{(k,r)}$ amounts to minimizing

$$QQ(\Delta;a) = \sum_{r=1}^{R}\sum_{k=1}^{K}\sum_{i=1}^{p^{(r)}} \left| y_i^{(k,r)} - s_i^{(k,r)} h^{(k,r)} e^{jd_i^{(r)}\Delta} \right|^2 + \sum_{k=1}^{K}\sum_{i=1}^{p^{(SCH)}} \left| y_i^{(k,SCH)} - s_i^{(k,SCH)} \left( \sum_{r=1}^{R} a_r h^{(k,r)} \right) e^{jd_i^{(SCH)}\Delta} \right|^2$$

$$= \sum_{r=1}^{R}\sum_{k=1}^{K}\sum_{i=1}^{p^{(r)}} \left| s_i^{(k,r)} \right|^2 \left| y_i^{(k,r)} / s_i^{(k,r)} \times e^{-jd_i^{(r)}\Delta} - h^{(k,r)} \right|^2 + \sum_{k=1}^{K}\sum_{i=1}^{p^{(SCH)}} \left| s_i^{(k,SCH)} \right|^2 \left| y_i^{(k,SCH)} / s_i^{(k,SCH)} e^{-jd_i^{(SCH)}\Delta} - \sum_{r=1}^{R} a_r h^{(k,r)} \right|^2$$

This is a quadratic form in the $h^{(k,r)}$, which thus has can be minimized analytically over these variables. Again, optimization over frequency error $\Delta$ has to be done numerically, with the result being an estimate of the frequency error $\Delta$, corresponding estimates $\hat{h}^{(k,r)}$, and an optimized loss $QQ_{\min}(A)$. The final estimate of $A$ is then the vector in the candidate set providing the smallest $QQ_{\min}(A)$. Also, taking a Bayesian perspective with a uniform prior on the finite set of candidate $A$:s, by computing the numbers $e^{-QQ\min(A)}$ for each $A$ and then normalizing these numbers as to sum to unity, we obtain estimates of the posterior probabilities of the respective candidate $A$.

Just as for the first scheme, there can be performed, after a hard decision of the true vector $A$, a refinement of the channel estimation for all antennas for which $a_i$ is non-zero.

For any of the embodiments, the approach can also be used for detecting the number of network node TX antennas or at least restricting the number of a hypothesis of the number of network node TX antennas. For example, in LTE, there is currently assumed that the number of network node antennas could be 1,2 or 4, which - for each detected cell - may need to be blindly detected by the terminal. In a straightforward approach, this can for instance be done by correlating to the reference symbols. The abovementioned invention can also be used for determining a lower bound on the number of TX antennas used in the network node. The highest index $i$ of the estimated non-zero $a_i$ elements of the estimated pre-coding vector $A$ gives an indication of the minimum number of TX antennas used by the network node. This in turn may be used for detecting the number of TX antennas.

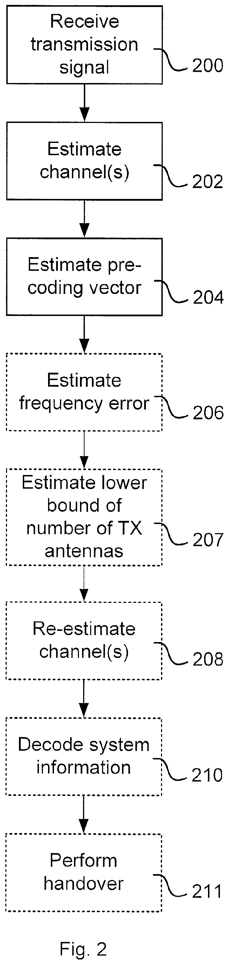

Fig. 2 is a flow chart illustrating a method according to an embodiment of the present invention. In a receiving step 200, a transmission signal, comprising reference symbols and synchronisation symbols e.g. as the example given in Fig. 1, as well as desired system information, e.g. for LTE the PBCH, is received from a network node of a cell. The cell can be the serving cell, any neighbouring cell, or any other cell from which system information is desired. Channels for each transmitting antenna of the network node are estimated using the reference symbols in a channel estimation step 202. To be able to perform the desired operations, corresponding pre-coding vector has to be known, each non-zero pre-coding vector element being associated with transmission by one transmit antenna of the network node of the cell. Therefore, in a pre-coding estimation step 204, the pre-coding vector is determined for the transmission signal, e.g. a broadcast signal on a broadcast channel. This can be done in any way demonstrated above. As also demonstrated above, a frequency error can optionally also be determined in a frequency error estimation step 206, and the estimated frequency error can be used for frequency adjustment in reception of the signals. Further, as also demonstrated above, a lower bound of number of transmit antennas used by the network node can optionally also be determined in a lower bound on the number of transmit antennas estimation step 207. Optionally, when the pre-coding vector is known, and symbols of the transmission signal are received, a channel estimate for all sub-carriers of the received broadcasted signal can be estimated for the estimated pre-coding vector in a channel re-estimating step 208. This is estimated from the received reference symbols and a reference symbol channel model defined for reference symbols of the transmission signal, and from the synchronisation symbols, the at least one pre-coding vector and a synchronisation symbol channel model defined for synchronisation symbols of the transmission signal When the refined channel estimate(s) are present, the desired transmitted system information can be decoded in a system information decoding step 210. Optionally, the acquired system information can be used for performing a handover in a handover performing step 211.

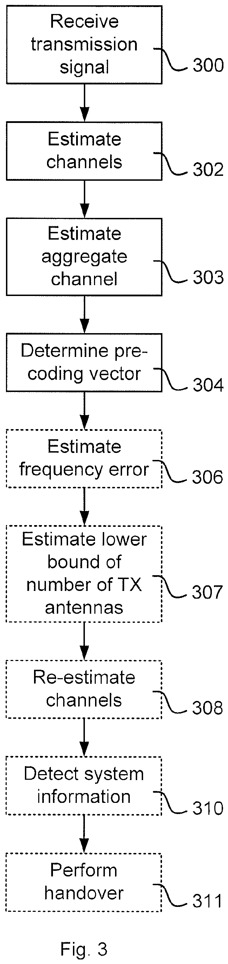

Fig. 3 is a flow chart illustrating a method according to an embodiment of the present invention. In a receiving step 300, a transmission signal, e.g. a broadcast signal on a broadcast channel, comprising reference symbols and synchronisation symbols is received from a network node of a cell, and channels for each transmitting antenna of the network node are estimated using the reference symbols in a channel estimation step 302, similar to the embodiment demonstrated with reference to Fig. 2. The cell can be the serving cell, any neighbouring cell, or any other cell from which system information is desired. In an aggregate channel estimation step 303, an aggregate channel is estimated for the synchronisation symbols that are sent on each used transmit antenna of the network node and to which the pre-coding vector is applied. Then, in a pre-coding vector determination step 304, an estimate of the pre-coding vector is provided by finding a pre-coding vector that best makes a match between on one side a linear combination of the pre-coding vector and the channel estimates from step 302, and on the other side the aggregate channel estimate from step 303. Details for performing this are demonstrated above with reference to the first scheme. As also demonstrated above, a frequency error can optionally also be determined in a frequency error estimation step 306, which frequency error can be used for frequency adjustment in reception of the signals in step 300. Further, as also demonstrated above, a lower bound of number of transmit antennas used by the network node can optionally also be determined in a lower bound of number of transmit antennas estimation step 307. When the pre-coding vector is estimated, the channel estimates are re-estimated for the estimated pre-coding vector in a channel re-estimating step 308, the desired system information decoded in a system information decoding step 310, and optionally performing a handover in a handover performing step 311, similar to the embodiment demonstrated with reference to Fig. 2.

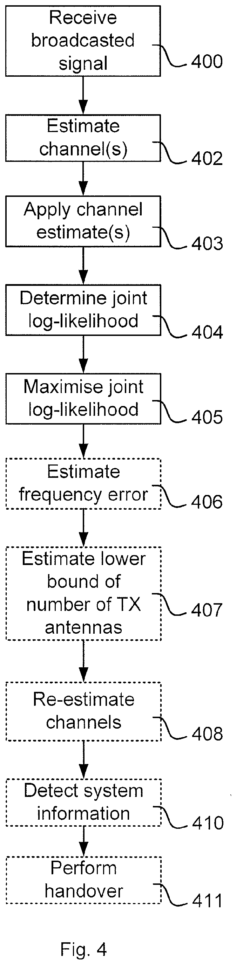

Fig. 4 is a flow chart illustrating a method according to an embodiment of the present invention. In a receiving step 400 a transmission signal, e.g. a broadcast signal on a broadcast channel, comprising reference symbols and synchronisation symbols, is received from a network node of a cell, and channels for each transmitting antenna of the network node are estimated using the reference symbols in a channel estimation step 302, similar to the embodiments demonstrated with reference to Figs. 2 and 3. The cell can be the serving cell, any neighbouring cell, or any other cell from which system information is desired. However, in this case no explicit estimation of the third channel estimate is made; instead a signal model based on the gained channel estimates is applied in a channel estimates application step 403 and a joint log-likelihood determination step 404. Then, for each element in a finite set of pre-coding vectors, the maximum of the joint log-likelihood is derived, where the maximum over the finite set of derived joint log-likelihoods gives an estimate of the pre-coding vector $A=(a_1,...,a_R)$, in a likelihood maximising step 405, and optionally also a frequency error estimate in a frequency error estimation step 406, which in practice for this embodiment is very much integrated with step 405. The frequency error can be used for frequency adjustment in reception of the signals in step 400. Details for performing these actions are demonstrated above with reference to the second scheme. Further, as also demonstrated above, a lower bound of number of transmit antennas used by the network node can optionally also be determined in a lower bound of number of transmit antennas estimation step 407. This can be performed by observing the highest index $i$ among the non-zero elements of the pre-coding vector. When the pre-coding vector has been estimated, the channel estimates are re-estimated for the estimated pre-coding vector in a channel re-estimating step 408, the desired broadcasted system information decoded in a system information decoding step 410, and optionally performing a handover in a handover performing step 411, similar to the embodiments demonstrated with reference to Figs. 2 and 3.

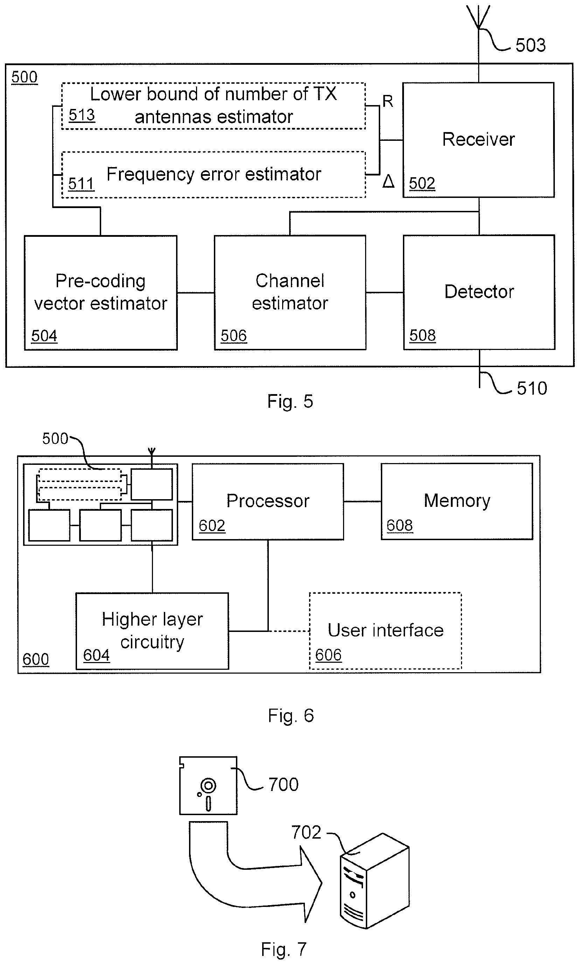

Fig. 5 is a block diagram schematically illustrating a decoder 500 according to an embodiment of the present invention. The decoder 500 comprises a receiver 502 that is arranged to receive a transmission signal, e.g. a broadcast signal on a broadcast channel, comprising reference symbols, synchronisation symbols, and system information from a network node of a neighbouring cell. The receiver 502 receives the broadcasted signal via one or more receiver antennas 503. A pre-coding vector estimator 504 is arranged to determine a pre-coding vector being associated with transmission of synchronisation signals from the network node of the at least one cell in the broadcast signal. The cell can be the serving cell, any neighbouring cell, or any other cell from which system information is desired. The pre-coding vector estimator 504 is arranged to gain knowledge of the actually used pre-coding vector as described above with reference to any of Figs 1 to 4. A channel estimator 506 is arranged to use received reference symbols to make a preliminary channel estimate for each transmit antenna used by the network node, and use the received reference symbols and the synchronisation symbols, taking the estimated pre-coding vector into account to perform a final channel estimation. This can be performed according to the principles demonstrated above. The received symbols and the channel estimate is provided to a detector 508 such that the decoder 500 is enabled to decode the system information using the at least one channel estimate and provide the decoded system information on its output 510. Optionally, a frequency error estimator 511 of the detector 500 is arranged to estimate a frequency error Δ based on information given by the pre-coding vector estimator 504, wherein the estimated frequency error Δ can be provided to and used by the receiver 502 to adjust frequency. Also optionally, a lower bound on number of transmit antennas estimator 513 of the detector is arranged to determine the highest number of non-zero elements in the pre-coding vector to be a lower bound on the number of transmit antennas R used by the network node.

Fig. 6 is a block diagram schematically illustrating a terminal 600 according to an embodiment of the invention. The terminal 600 comprises a decoder 500 as the one demonstrated with reference to Fig. 5. The terminal preferably also comprises a processor 602 controlling operation of the decoder 500, as well as higher layer circuitry 604 and an optional user interface 606. Preferably, the terminal also comprises a memory 608 connected to the processor.

The method according to the present invention is suitable for implementation with aid of processing means, such as computers and/or processors, as the operation of OFDM systems highly relies on computerized signal processing in general. Therefore, there is provided computer programs, comprising instructions arranged to cause the processing means, processor, or computer to perform the steps of any of the methods according to any of the embodiments described with reference to any of Figs. 2 to 4, in a terminal. The computer programs preferably comprises program code which is stored on a computer readable medium 700, as illustrated in Fig. 7, which can be loaded and executed by a processing means, processor, or computer 702 to cause it to perform the methods, respectively, according to embodiments of the present invention, preferably as any of the embodiments described with reference to any of Figs. 2 to 4. The computer 702 and computer program product 700 can be arranged to execute the program code sequentially where actions of the any of the methods are performed stepwise, but mostly be arranged to execute the program code on a real-time basis where actions of any of the methods are performed upon need and availability of data. The processing means, processor, or computer 702 is preferably what normally is referred to as an embedded system. Thus, the depicted computer readable medium 700 and computer 702 in Fig. 7 should be construed to be for illustrative purposes only to provide understanding of the principle, and not to be construed as any direct illustration of the elements.

**Claims**

1. A method for a terminal (600) of a cellular telecommunication system for determining information about a node of a network of the cellular telecommunication system, the cellular telecommunication system enabling the determination of the information by the terminal (600) from system information transmitted from at least one cell operated by the network node, wherein the cellular telecommunication system employs Orthogonal Frequency Division Multiple Access, the method comprising:

receiving (200, 300, 400), a transmission signal and the system information, from the network node of the at least one cell, wherein the received transmission signal comprises reference symbols and synchronisation symbols;
estimating (202, 302, 402), for each transmit antenna of the network node, a preliminary channel estimate based on the received reference symbols;
estimating (204, 304, 403-405) a pre-coding vector, being associated with transmission by at least one transmit antenna of the network node of the at least one cell, for the received synchronisation symbols, wherein estimating (204, 304, 403-405) the pre-coding vector comprises:

estimating (303) an aggregate channel for the synchronisation symbols being sent on each transmit antenna of the network node; and
determining (304) the pre-coding vector to be the one best matching a linear combination of the preliminary channel estimates and the pre-coding vector with the estimated aggregate channel;

re-estimating (208, 308, 408) a channel estimate for each transmit antenna of the network node based on the received reference symbols, a reference symbol channel model defined for the received reference symbols, the received synchronisation symbols, the estimated pre-coding vector, and a synchronisation symbol channel model defined for the received synchronisation symbols; and
decoding (210, 310, 410) the received system information using the re-estimated at least one channel estimate.

2. The method according to claim 1, wherein determining (304) the pre-coding vector to be the one best matching the linear combination comprises: measuring a distance between the linear combination of the preliminary channel estimates and the pre-coding vector, and the aggregate channel estimate.

3. The method according to claim 2, wherein the distance is calculated by:

$$\sum_{k=1}^{K}\left|\hat{h}^{(k,SCH)} - \left(a_1\hat{h}^{(k,1)} + \cdots + a_R\hat{h}^{(k,R)}\right)\right|^2$$

where $K$ is the number of blocks, $R$ is the number of used transmit antennas, $\hat{h}^{(k,SCH)}$ with superindex $SCH$ are elements of the aggregate channel estimate, $a_i$, $i=1...R$, are elements of the pre-coding vector, and $\hat{h}^{(k,j)}$, $j=1...R$, are elements of the preliminary channel estimates.

4. The method according to any of claims 1 to 3, further comprising:
estimating (206, 306, 406) a frequency error by optimising a channel estimate function with respect to the frequency error, wherein an optimal frequency error is determined to be the estimated frequency error, such that receiving the transmission signal comprises compensating frequency based on the estimated frequency error, and wherein the channel estimate function is:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)} \times e^{-jd_i^{(r)}\Delta} - h^{(k,r)}\right|^2 + \sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta} - \sum_{r=1}^{R}a_r h^{(k,r)}\right|^2$$

where $K$ is the number of blocks, $R$ is the number of used transmit antennas, $p^{(r)}$ is the number of reference symbols from antenna $r$ in each block, $s_i^{(k,r)}$ is value of $i^{th}$ transmitted reference symbol from antenna $r$ in block $k$, $y_i^{(k,r)}$ is received reference symbol at position of $s_i^{(k,r)}$, $h^{(k,r)}$ are channel coefficients, $d_i^{(r)}$ is relative position between reference symbol $i$ and synchronisation symbol from antenna r, $p^{(SCH)}$ is the number of synchronisation symbols in each block, $s_i^{(k,SCH)}$ is value of $i^{th}$ transmitted synchronisation symbol in block $k$, $y_i^{(k,SCH)}$ is received synchronisation symbol at position of $s_i^{(k,SCH)}$, $d_i^{(SCH)}$ is relative position between synchronisation symbol $i$ and reference symbol, $a_r$ is element of the pre-coding vector, and $\Delta$ is the frequency error.

5. The method according to any of claims 1 to 4, further comprising: estimating (207, 307, 407), a lower bound on a number of transmit antennas used by the network node, by determining the highest index of non-zero elements of the pre-coding vector to be the lower bound.

6. A computer program comprising computer executable instructions causing a processor, when executed thereon, to perform the steps according to any of claims 1 to 5.

7. A terminal (600) for a cellular telecommunication system in which system information is provided from a network of the cellular telecommunication system, the cellular telecommunication system enabling determination of information by the terminal (600) from the system information transmitted from at least one cell, wherein the cellular telecommunication system employs Orthogonal Frequency Division Multiple Access, the terminal (600) comprising: a decoder (500), the decoder (500) comprising:

a receiver (502) arranged to receive, a transmission signal and the system information, from a network node of the at least one cell, wherein the received transmission signal comprises reference symbols and synchronisation symbols;

a pre-coding vector estimator (504) arranged to estimate a pre-coding vector, being associated with transmission by at least one transmit antenna of the network node of the at least one cell, for the received synchronisation symbols; and

a channel estimator (506) arranged to provide a preliminary channel estimate, for each transmit antenna of the network node, based on the received reference symbols, and a re-estimated channel estimate for each transmit antenna of the network node based on the received reference symbols, a reference symbol channel model defined for the received reference symbols, the received synchronisation symbols, the estimated pre-coding vector, and a synchronisation symbol channel model defined for the received synchronisation symbols, wherein the decoder (500) is enabled to decode the received system information using the re-estimated at least one channel estimate, and

wherein the pre-coding vector estimator (504) is further arranged to:

estimate an aggregate channel for the synchronisation symbols being sent on each transmit antenna of the network node; and

determine the pre-coding vector to be the one best matching a linear combination of the preliminary channel estimates and the pre-coding vector with the estimated aggregate channel.

8. The terminal (600) according to claim 7, wherein the pre-coding vector best matching is the one with a minimum distance between the linear combination of the preliminary channel estimates and the pre-coding vector, and the aggregate channel estimate.

9. The terminal (600) according to claim 8, wherein a distance is calculated as:

$$\sum_{k=1}^{K}\left|\hat{h}^{(k,SCH)} - \left(a_1\hat{h}^{(k,1)} + \cdots + a_R\hat{h}^{(k,R)}\right)\right|^2$$

where $K$ is the number of blocks, $R$ is the number of used transmit antennas, $\hat{h}^{(k,SCH)}$ with superindex $SCH$ are elements of the aggregate channel estimate, $a_i$, $i=1...R$, are elements of the pre-coding vector, and $\hat{h}^{(k,j)}$, $j=1...R$, are elements of the preliminary channel estimates.

10. The terminal (600) according to any of claims 7 to 9, wherein the decoder (500) further comprises: a frequency error estimator (511) arranged to optimise a channel estimate function with respect to a frequency error, wherein an optimal frequency error is determined to be the estimated frequency error, wherein the estimated frequency error is provided to the receiver (502) such that the receiver (502) is enabled to correct the frequency error, and wherein the channel estimate function is:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)} \times e^{-jd_i^{(r)}\Delta} - h^{(k,r)}\right|^2 + \sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta} - \sum_{r=1}^{R}a_rh^{(k,r)}\right|^2$$

where $K$ is the number of blocks, $R$ is the number of used transmit antennas, $p^{(r)}$ is the number of symbols from antenna $r$ in each block, $s_i^{(k,r)}$ is value of $i^{th}$ transmitted reference symbol from antenna $r$ in block $k$, $y_i^{(k,r)}$ is received reference symbol at position of $s_i^{(k,r)}$, $h^{(k,r)}$ are channel coefficients, $d_i^{(r)}$ is relative position between reference symbol $i$ and synchronisation symbol from antenna $r$, $p^{(SCH)}$ is the number of synchronisation symbols in each block, $s_i^{(k,SCH)}$ is value of $i^{th}$ transmitted synchronisation symbol in block $k$, $y_i^{(k,SCH)}$ is received synchronisation symbol at position of $\cdot s_i^{(k,SCH)}$, $d_i^{(SCH)}$ is relative position between synchronisation symbol $i$ and reference symbol, $a_r$ is element of the pre-coding vector, and $\Delta$ is the frequency error.

11. The terminal (600) according to any of claims 7 to 10, wherein the decoder (500) further comprises: an estimator (513) for determining a lower bound of a number of transmit antennas used by the network node, wherein the estimator (513) is arranged to determine the highest index of non-zero elements of the pre-coding vector to be the lower bound.

12. The terminal (600) according to claim 11, being arranged to perform handover (211, 311, 411) based on the received system information.

**Patentansprüche**

1. Verfahren für ein Endgerät (600) eines Mobiltelekommunikationssystems zur Festlegung von Informationen über einen Knoten eines Netzwerks des Mobiltelekommunikationssystems, wobei das Mobiltelekommunikationssystem die Festlegung der Informationen durch das Endgerät (600) aus Systeminformationen ermöglicht, die von zumindest einer Zelle übertragen werden, die durch den Netzwerkknoten betrieben wird, wobei das Mobiltelekommunikationssystem Mehrfachzugriff durch Verteilung mit orthogonalen Frequenzen einsetzt, wobei das Verfahren Folgendes umfasst:

Empfangen (200, 300, 400) eines Übertragungssignals und der Systeminformationen von dem Netzwerkknoten der zumindest einen Zelle, wobei das empfangene Übertragungssignal Referenzsymbole und Synchronisierungssymbole umfasst;
Schätzen (202, 302, 402) einer vorläufigen Kanalschätzung für jede Übertragungsantenne des Netzwerkknotens auf Grundlage der empfangenen Referenzsymbole;
Schätzen (204, 304, 403-405) eines Vorcodierungsvektors, der mit Übertragung durch zumindest eine Übertragungsantenne des Netzwerkknotens der zumindest einen Zelle verbunden ist, für die empfangenen Synchronisierungssymbole, wobei das Schätzen (204, 304, 403-405) des Vorcodierungsvektors Folgendes umfasst:

Schätzen (303) eines Aggregatkanals für die Synchronisierungssymbole, die an jeder Übertragungsantenne des Netzwerkknotens gesendet werden; und
Festlegen (304) des Vorcodierungsvektors als den einen, der am besten mit einer linearen Kombination der vorläufigen Kanalschätzungen und des Vorcodierungsvektors mit dem geschätzten Aggregatkanal übereinstimmt;

erneutes Schätzen (208, 308, 408) einer Kanalschätzung für jede Übertragungsantenne des Netzwerkknotens auf Grundlage der empfangenen Referenzsymbole, eines Referenzsymbolkanalmodells, das für die empfangenen Referenzsymbole definiert ist, der empfangenen Synchronisierungssymbole, des geschätzten Vorcodierungsvektors und eines Synchronisierungssymbolkanalmodells, das für die empfangenen Synchronisierungssymbole definiert ist; und
Decodieren (210, 310, 410) der empfangenen Systeminformationen unter Verwendung der erneut geschätzten zumindest einen Kanalschätzung.

2. Verfahren nach Anspruch 1, wobei das Festlegen (304) des Vorcodierungsvektors als den einen, der am besten mit der linearen Kombination übereinstimmt, Folgendes umfasst: Messen eines Abstands zwischen der linearen Kombination aus den vorläufigen Kanalschätzungen und dem Vorcodierungsvektor und der Aggregatkanalschätzung.

3. Verfahren nach Anspruch 2, wobei der Abstand durch Folgendes berechnet wird:

$$\sum_{k=1}^{K}\left|\hat{h}^{(k,SCH)} - \left(a_1\hat{h}^{(k,1)} + \cdots + a_R\hat{h}^{(k,R)}\right)\right|^2$$

wobei $K$ die Anzahl an Blöcken ist, $R$ die Anzahl an verwendeten Übertragungsantennen ist, $\hat{h}^{(k,SCH)}$ mit Superindex *SCH* Elemente der Aggregatkanalschätzung sind, $a_i$, $i$=1...$R$ Elemente des Vorcodierungsvektors sind, und $\hat{h}^{(k,j)}$, $j$=1...$R$ Elemente der vorläufigen Kanalschätzungen sind.

4. Verfahren nach einem der Ansprüche 1 bis 3, ferner umfassend:

Schätzen (206, 306, 406) eines Frequenzfehlers durch Optimieren einer Kanalschätzungsfunktion in Bezug auf den Frequenzfehler, wobei ein optimaler Frequenzfehler als der geschätzte Frequenzfehler festgelegt wird, sodass das Empfangen des Übertragungssignals Kompensation von Frequenz auf Grundlage des geschätzten Frequenzfehlers umfasst, und

wobei die Kanalschätzungsfunktion wie folgt ist:

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)} \times e^{-jd_i^{(r)}\Delta} - h^{(k,r)}\right|^2 + \sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta} - \sum_{r=1}^{R}a_rh^{(k,r)}\right|^2$$

wobei $K$ die Anzahl an Blöcken ist, $R$ die Anzahl an verwendeten Übertragungsantennen ist, $p^{(r)}$ die Anzahl an Referenzsymbolen von Antenne $r$ in jedem Block ist, $s_i^{(k,r)}$ der Wert des $i$-ten übertragenen Referenzsymbols von Antenne $r$ in Block $k$ ist, $y_i^{(k,r)}$ das empfangene Referenzsymbol an Position von $s_i^{(k,r)}$ ist, $h^{(k,r)}$ Kanalkoeffizienten sind, $d_i^{(r)}$ relative Position zwischen Referenzsymbol $i$ und Synchronisierungssymbol von Antenne $r$ ist, $p^{(SCH)}$ die Anzahl an Synchronisierungssymbolen in jedem Block ist, $s_i^{(k,SCH)}$ der Wert des $i$-ten übertragenen Synchronisierungssymbols in Block $k$ ist, $y_i^{(k,SCH)}$ das empfangene Synchronisierungssymbol an Position von $s_i^{(k,SCH)}$ ist, $d_i^{(SCH)}$ relative Position zwischen Synchronisierungssymbol $i$ und Referenzsymbol ist, $a_r$ Element des Vorcodierungsvektors ist und $\Delta$ der Frequenzfehler ist.

5. Verfahren nach einem der Ansprüche 1 bis 4, ferner umfassend: Schätzen (207, 307, 407) einer Untergrenze einer Anzahl an Übertragungsantennen, die durch den Netzwerkknoten verwendet wird, indem festgelegt wird, dass der höchste Index an Nichtnullelementen des Vorcodierungsvektors die Untergrenze ist.

6. Computerprogramm, umfassend computerausführbare Anweisungen, die einen Prozessor, wenn er darauf ausgeführt wird, dazu veranlassen, die Schritte nach einem der Ansprüche 1 bis 5 durchzuführen.

7. Endgerät (600) für ein Mobiltelekommunikationssystem, in dem Systeminformationen von einem Netzwerk des Mobiltelekommunikationssystems bereitgestellt werden, wobei das Mobiltelekommunikationssystem die Festlegung von Informationen durch das Endgerät (600) aus den Systeminformationen ermöglicht, die von zumindest einer Zelle übertragen werden, wobei das Mobiltelekommunikationssystem Mehrfachzugriff durch Verteilung mit orthogonalen Frequenzen einsetzt, wobei das Endgerät (600) Folgendes umfasst:

einen Decoder (500), wobei der Decoder (500) Folgendes umfasst:

einen Empfänger (502), der angeordnet ist, um ein Übertragungssignal und die Systeminformationen von einem Netzwerkknoten der zumindest einen Zelle zu empfangen, wobei das empfangene Übertragungssignal Referenzsymbole und Synchronisierungssymbole umfasst;

einen Vorcodierungsvektorschätzer (504), der angeordnet ist, um einen Vorcodierungsvektor zu schätzen, der mit Übertragung durch zumindest eine Übertragungszelle des Netzwerkknotens der zumindest einen Zelle verbunden ist, für die empfangenen Synchronisierungssymbole; und

einen Kanalschätzer (506), der angeordnet ist, um eine vorläufige Kanalschätzung für jede Übertragungsantenne des Netzwerkknotens auf Grundlage der empfangenen Referenzsymbole und eine erneut geschätzte Kanalschätzung für jede Übertragungsantenne des Netzwerkknotens auf Grundlage der empfangenen Referenzsymbole, eines Referenzsymbolkanalmodells, das für die empfangenen Referenzsymbole definiert ist, der empfangenen Synchronisierungssymbole, des geschätzten Vorcodierungsvektors und eines Synchronisierungssymbolkanalmodells, das für die empfangenen Synchronisierungssymbole definiert ist, bereitzustellen,

wobei dem Decoder (500) ermöglicht wird, die empfangenen Systeminformationen unter Verwendung der erneut geschätzten zumindest einen Kanalschätzung zu decodieren, und

wobei der Vorcodierungsvektorschätzer (504) ferner für Folgendes angeordnet ist:

Schätzen eines Aggregatkanals für die Synchronisierungssymbole, die an jeder Übertragungsantenne des Netzwerkknotens gesendet werden; und

Festlegen des Vorcodierungsvektors als den einen, der am besten mit einer linearen Kombination der vorläufigen Kanalschätzungen und des Vorcodierungsvektors mit dem geschätzten Aggregatkanal übereinstimmt.

**8.** Endgerät (600) nach Anspruch 7, wobei der Vorcodierungsvektor, der am besten übereinstimmt, derjenige mit einem Mindestabstand zwischen der linearen Kombination aus den vorläufigen Kanalschätzungen und dem Vorcodierungsvektor und der Aggregatkanalschätzung ist.

**9.** Endgerät (600) nach Anspruch 8, wobei ein Abstand wie folgt berechnet wird:

$$\sum_{k=1}^{K} \left| \hat{h}^{(k,SCH)} - \left( a_1 \hat{h}^{(k,1)} + \cdots + a_R \hat{h}^{(k,R)} \right) \right|^2$$

wobei $K$ die Anzahl an Blöcken ist, $R$ die Anzahl an verwendeten Übertragungsantennen ist, $\hat{h}^{(k,SCH)}$ mit Superindex $SCH$ Elemente der Aggregatkanalschätzung sind, $a_i$, $i=1...R$ Elemente des Vorcodierungsvektors sind, und $\hat{h}^{(k,j)}$, $j=1...R$ Elemente der vorläufigen Kanalschätzungen sind.

**10.** Endgerät (600) nach einem der Ansprüche 7 bis 9, wobei der Decoder (500) ferner Folgendes umfasst: einen Frequenzfehlerschätzer (511), der angeordnet ist, um eine Kanalschätzungsfunktion in Bezug auf einen Frequenzfehler zu optimieren, wobei ein optimaler Frequenzfehler als der geschätzte Frequenzfehler festgelegt wird, wobei der geschätzte Frequenzfehler dem Empfänger (502) bereitgestellt wird, sodass dem Empfänger (502) ermöglicht wird, den Frequenzfehler zu korrigieren, und wobei die Kanalschätzungsfunktion wie folgt ist:

$$\sum_{r=1}^{R}\sum_{k=1}^{K}\sum_{i=1}^{p^{(r)}} \left| s_i^{(k,r)} \right|^2 \left| y_i^{(k,r)} / s_i^{(k,r)} \times e^{-jd_i^{(r)}\Delta} - h^{(k,r)} \right|^2 + \sum_{k=1}^{K}\sum_{i=1}^{p^{(SCH)}} \left| s_i^{(k,SCH)} \right|^2 \left| y_i^{(k,SCH)} / s_i^{(k,SCH)} e^{-jd_i^{(SCH)}\Delta} - \sum_{r=1}^{R} a_r h^{(k,r)} \right|^2$$

wobei $K$ die Anzahl an Blöcken ist, $R$ die Anzahl an verwendeten Übertragungsantennen ist, $p^{(r)}$ die Anzahl an Symbolen von Antenne $r$ in jedem Block ist, $s_i^{(k,r)}$ der Wert des $i$-ten übertragenen Referenzsymbols von Antenne $r$ in Block $k$ ist, $y_i^{(k,r)}$ das empfangene Referenzsymbol an Position von $s_i^{(k,r)}$ ist, $h^{(k,r)}$ Kanalkoeffizienten sind, $d_i^{(r)}$ relative Position zwischen Referenzsymbol $i$ und Synchronisierungssymbol von Antenne $r$ ist, $p^{(SCH)}$ die Anzahl an Synchronisierungssymbolen in jedem Block ist, $s_i^{(k,SCH)}$ der Wert des $i$-ten übertragenen Synchronisierungssymbols in Block *k* ist, *k,* $y_i^{(k,SCH)}$ das empfangene Synchronisierungssymbol an Position von $s_i^{(k,SCH)}$ ist, $d_i^{(SCH)}$ relative Position zwischen Synchronisierungssymbol *i* und Referenzsymbol ist, $a_r$ Element des Vorcodierungsvektors ist und $\Delta$ der Frequenzfehler ist.

11. Endgerät (600) nach einem der Ansprüche 7 bis 10, wobei der Decoder (500) ferner Folgendes umfasst: einen Schätzer (513) zum Festlegen einer Untergrenze einer Anzahl an Übertragungsantennen, die durch den Netzwerkknoten verwendet wird, wobei der Schätzer (513) angeordnet ist, um den höchsten Index an Nichtnullelementen des Vorcodierungsvektors als Untergrenze festzulegen.

12. Endgerät (600) nach Anspruch 11, das angeordnet ist, um Übergabe (211, 311, 411) auf Grundlage der empfangenen Systeminformationen durchzuführen.

## Revendications

1. Procédé destiné à un terminal (600) d'un système de télécommunication cellulaire pour déterminer des informations concernant un noeud d'un réseau du système de télécommunication cellulaire, le système de télécommunication cellulaire permettant la détermination des informations par le terminal (600) à partir d'informations système transmises d'au moins une cellule exploitée par le noeud de réseau, dans lequel le système de télécommunication cellulaire utilise un accès multiple par division de fréquence orthogonale, le procédé comprenant :

   la réception (200, 300, 400), d'un signal de transmission et des informations système, du noeud de réseau de l'au moins une cellule, dans lequel le signal de transmission reçu comprend des symboles de référence et des symboles de synchronisation ;
   l'estimation (202, 302, 402), pour chaque antenne d'émission du noeud de réseau, d'une estimation de canal préliminaire sur la base des symboles de référence reçus ;
   l'estimation (204, 304, 403-405) d'un vecteur de précodage, associé à la transmission par au moins une antenne d'émission du noeud de réseau de l'au moins une cellule, pour les symboles de synchronisation reçus, dans lequel l'estimation (204, 304, 403-405) du vecteur de précodage comprend :

      l'estimation (303) d'un canal agrégé pour les symboles de synchronisation étant envoyés sur chaque antenne d'émission du noeud de réseau ; et
      la détermination (304) du vecteur de précodage comme étant celui qui correspond le mieux à une combinaison linéaire des estimations de canal préliminaires et du vecteur de précodage avec le canal agrégé estimé ;

   la réestimation (208, 308, 408) d'une estimation de canal pour chaque antenne d'émission du noeud de réseau sur la base des symboles de référence reçus, d'un modèle de canal de symbole de référence défini pour les symboles de référence reçus, les symboles de synchronisation reçus, le vecteur de précodage estimé, et un modèle de canal de symbole de synchronisation défini pour les symboles de synchronisation reçus ; et
   le décodage (210, 310, 410) des informations système reçues en utilisant l'au moins une estimation de canal réestimée.

2. Procédé selon la revendication 1, dans lequel la détermination (304) du vecteur de précodage comme étant celui qui correspond le mieux à la combinaison linéaire comprend : la mesure d'une distance entre la combinaison linéaire des estimations de canal préliminaires et du vecteur de précodage, et l'estimation de canal agrégée.

3. Procédé selon la revendication 2, dans lequel la distance est calculée par :

$$\sum_{k=1}^{K} \left| \hat{h}^{(k,SCH)} - \left( a_1 \hat{h}^{(k,1)} + \cdots + a_R \hat{h}^{(k,R)} \right) \right|^2$$

où $K$ est le nombre de blocs, $R$ est le nombre d'antennes d'émission utilisées, $\hat{h}^{(k,SCH)}$ avec le superindex $SCH$ sont des éléments de l'estimation de canal agrégée, $a_i$, $i = 1...R$, sont des éléments du vecteur de précodage, et $\hat{h}^{(k,j)}$, $j = 1...R$, sont des éléments des estimations de canal préliminaires.

4. Procédé selon l'une quelconque des revendications 1 à 3, comprenant en outre :
l'estimation (206, 306, 406) d'une erreur de fréquence en optimisant une fonction d'estimation de canal par rapport à l'erreur de fréquence, dans lequel une erreur de fréquence optimale est déterminée comme étant l'erreur de fréquence estimée, de sorte que la réception du signal de transmission comprend une fréquence de compensation sur la base de l'erreur de fréquence estimée, et dans lequel la fonction d'estimation de canal est :

$$\sum_{r=1}^{R}\sum_{k=1}^{K}\sum_{i=1}^{p^{(r)}}\left|s_i^{(k,r)}\right|^2\left|y_i^{(k,r)}/s_i^{(k,r)}\times e^{-jd_i^{(r)}\Delta}-h^{(k,r)}\right|^2+\sum_{k=1}^{K}\sum_{i=1}^{p^{(SCH)}}\left|s_i^{(k,SCH)}\right|^2\left|y_i^{(k,SCH)}/s_i^{(k,SCH)}e^{-jd_i^{(SCH)}\Delta}-\sum_{r=1}^{R}a_rh^{(k,r)}\right|^2$$

où $K$ est le nombre de blocs, $R$ est le nombre d'antennes d'émission utilisées, $p^{(r)}$ est le nombre de symboles de référence de l'antenne $r$ dans chaque bloc, $s_i^{(k,r)}$ est la valeur du symbole de référence transmis $i^{th}$ de l'antenne $r$ dans le bloc $k$, $y_i^{(k,r)}$ est le symbole de référence reçu à la position de $s_i^{(k,r)}$, $h^{(k,r)}$ sont des coefficients de canal, $d_i^{(r)}$ est la position relative entre le symbole de référence $i$ et le symbole de synchronisation de l'antenne $r$, $p^{(SCH)}$ est le nombre de symboles de synchronisation dans chaque bloc, $s_i^{(k,SCH)}$ est la valeur du symbole de synchronisation transmis $i^{th}$ dans le bloc $k$, $y_i^{(k,SCH)}$ est le symbole de synchronisation reçu à la position de $s_i^{(k,SCH)}$, $d_i^{(SCH)}$ est la position relative entre le symbole de synchronisation $i$ et le symbole de référence, $a_r$ est un élément du vecteur de précodage et $\Delta$ est l'erreur de fréquence.

5. Procédé selon l'une quelconque des revendications 1 à 4, comprenant en outre : l'estimation (207, 307, 407) d'une limite inférieure sur un nombre d'antennes d'émission utilisées par le noeud de réseau, en déterminant l'indice le plus élevé d'éléments non nuls du vecteur de précodage comme étant la limite inférieure.

6. Programme informatique comprenant des instructions exécutables par ordinateur amenant un processeur, lorsqu'il est exécuté, à effectuer les étapes selon l'une quelconque des revendications 1 à 5.

7. Terminal (600) pour un système de télécommunication cellulaire dans lequel des informations système sont fournies par un réseau du système de télécommunication cellulaire, le système de télécommunication cellulaire permettant la détermination d'informations par le terminal (600) à partir des informations système transmises depuis au moins une cellule, dans lequel le système de télécommunication cellulaire utilise un accès multiple par division de fréquence orthogonale, le terminal (600) comprenant :

un décodeur (500), le décodeur (500) comprenant :

un récepteur (502) disposé pour recevoir un signal de transmission et les informations système, d'un noeud de réseau de l'au moins une cellule, dans lequel le signal de transmission reçu comprend des symboles de référence et des symboles de synchronisation ;
un estimateur de vecteur de précodage (504) disposé pour estimer un vecteur de précodage, étant associé à la transmission par au moins une antenne d'émission du noeud de réseau de l'au moins une cellule, pour les symboles de synchronisation reçus ; et
un estimateur de canal (506) disposé pour fournir une estimation de canal préliminaire, pour chaque antenne d'émission du noeud de réseau, sur la base des symboles de référence reçus, et une estimation de canal pré-estimée pour chaque antenne d'émission du noeud de réseau sur la base de symboles de référence reçus, un modèle de canal de symbole de référence défini pour les symboles de référence reçus, les symboles de synchronisation reçus, le vecteur de précodage estimé, et un modèle de canal de symbole de synchronisation défini pour les symboles de synchronisation reçus, dans lequel le décodeur (500) est peut décoder les informations système reçues en utilisant l'au moins une estimation de canal réestimée, et

dans lequel l'estimateur vectoriel de précodage (504) est en outre disposé pour :

estimer un canal agrégé pour les symboles de synchronisation étant envoyés sur chaque antenne d'émission du noeud de réseau ; et
déterminer le vecteur de précodage comme étant celui qui correspond le mieux à une combinaison linéaire des estimations de canal préliminaires et du vecteur de précodage avec le canal agrégé estimé.

8. Terminal (600) selon la revendication 7, dans lequel le vecteur de précodage correspondant le mieux est celui ayant une distance minimale entre la combinaison linéaire des estimations de canal préliminaires et du vecteur de précodage, et l'estimation de canal agrégée.

9. Terminal (600) selon la revendication 8, dans lequel une distance est calculée comme suit :

$$\sum_{k=1}^{K} \left| \hat{h}^{(k,SCH)} - \left( a_1 \hat{h}^{(k,1)} + \cdots + a_R \hat{h}^{(k,R)} \right) \right|^2$$

où $K$ est le nombre de blocs, $R$ est le nombre d'antennes d'émission utilisées, $\hat{h}^{(k,SCH)}$ avec le superindex $SCH$ sont des éléments de l'estimation de canal agrégée, $a_i$, $i=1...R$, sont des éléments du vecteur de précodage, et $\hat{h}^{(k,j)}$, $j=1...R$, sont des éléments des estimations de canal préliminaires.

10. Terminal (600) selon l'une quelconque des revendications 7 à 9, dans lequel le décodeur (500) comprend en outre : un estimateur d'erreur de fréquence (511) disposé pour optimiser une fonction d'estimation de canal par rapport à une erreur de fréquence, dans lequel une erreur de fréquence optimale est déterminée comme étant l'erreur de fréquence estimée, dans lequel l'erreur de fréquence estimée est fournie au récepteur (502) de sorte que le récepteur (502) peut corriger l'erreur de fréquence, et dans lequel la fonction d'estimation de canal est :

$$\sum_{r=1}^{R} \sum_{k=1}^{K} \sum_{i=1}^{p^{(r)}} \left| s_i^{(k,r)} \right|^2 \left| y_i^{(k,r)}/s_i^{(k,r)} \times e^{-jd_i^{(r)}\Delta} - h^{(k,r)} \right|^2 + \sum_{k=1}^{K} \sum_{i=1}^{p^{(SCH)}} \left| s_i^{(k,SCH)} \right|^2 \left| y_i^{(k,SCH)}/s_i^{(k,SCH)} e^{-jd_i^{(SCH)}\Delta} - \sum_{r=1}^{R} a_r h^{(k,r)} \right|^2$$

où $K$ est le nombre de blocs, $R$ est le nombre d'antennes d'émission utilisées, $p^{(r)}$ est le nombre de symboles de l'antenne $r$ dans chaque bloc, $s_i^{(k,r)}$ est la valeur du symbole de référence transmis $i^{th}$ de l'antenne $r$ dans le bloc $k$, $y_i^{(k,r)}$ est le symbole de référence reçu à la position de $s_i^{(k,r)}$, $h^{(k,r)}$ sont des coefficients de canal, $d_i^{(r)}$ est la position relative entre le symbole de référence $i$ et le symbole de synchronisation de l'antenne r, $p^{(SCH)}$ est le nombre de symboles de synchronisation dans chaque bloc, $s_i^{(k,SCH)}$ est la valeur du symbole de synchronisation transmis $i^{th}$ dans le bloc $k$, $y_i^{(k,SCH)}$ est le symbole de synchronisation reçu à la position de $s_i^{(k,SCH)}$, $d_i^{(SCH)}$ est la position relative entre le symbole de synchronisation $i$ et le symbole de référence, $a_r$ est un élément du vecteur de précodage, et $\Delta$ est l'erreur de fréquence.

11. Terminal (600) selon l'une quelconque des revendications 7 à 10, dans lequel le décodeur (500) comprend en outre : un estimateur (513) pour déterminer une limite inférieure d'un nombre d'antennes d'émission utilisées par le noeud de réseau, dans lequel l'estimateur (513) est disposé pour déterminer l'indice le plus élevé d'éléments non nuls du vecteur de précodage comme étant la limite inférieure.

12. Terminal (600) selon la revendication 11, disposé pour effectuer un transfert intercellulaire (211, 311, 411) sur la base des informations système reçues.

Fig. 1

```
┌─────────────────┐
│    Receive      │
│  transmission   ╮── 200
│     signal      │
└────────┬────────┘
         │
         ▼
┌─────────────────┐
│    Estimate     │
│   channel(s)    ╮── 202
│                 │
└────────┬────────┘
         │
         ▼
┌─────────────────┐
│   Estimate pre- │
│  coding vector  ╮── 204
│                 │
└────────┬────────┘
         │
         ▼
┌ ─ ─ ─ ─ ─ ─ ─ ─ ┐
    Estimate
│ frequency error ╮── 206
 ─ ─ ─ ─ ┬ ─ ─ ─ ─ 
         │
         ▼
┌ ─ ─ ─ ─ ─ ─ ─ ─ ┐
  Estimate lower
│    bound of     │
   number of TX   ╮── 207
│    antennas     │
 ─ ─ ─ ─ ┬ ─ ─ ─ ─ 
         │
         ▼
┌ ─ ─ ─ ─ ─ ─ ─ ─ ┐
    Re-estimate
│   channel(s)    ╮── 208
 ─ ─ ─ ─ ┬ ─ ─ ─ ─ 
         │
         ▼
┌ ─ ─ ─ ─ ─ ─ ─ ─ ┐
  Decode system
│   information   ╮── 210
 ─ ─ ─ ─ ┬ ─ ─ ─ ─ 
         │
         ▼
┌ ─ ─ ─ ─ ─ ─ ─ ─ ┐
    Perform
│    handover     ╮── 211
 ─ ─ ─ ─ ─ ─ ─ ─ ─ 
```

Fig. 2

```
┌─────────────────┐
│     Receive     │
│  transmission   ╲─── 300
│     signal      │
└────────┬────────┘
         │
         ▼
┌─────────────────┐
│    Estimate     │
│    channels     ╲─── 302
│                 │
└────────┬────────┘
         │
         ▼
┌─────────────────┐
│    Estimate     │
│    aggregate    ╲─── 303
│    channel      │
└────────┬────────┘
         │
         ▼
┌─────────────────┐
│  Determine pre- │
│  coding vector  ╲─── 304
│                 │
└────────┬────────┘
         │
         ▼
┌ ─ ─ ─ ─ ─ ─ ─ ─ ┐
│    Estimate     │
   frequency error ╲─── 306
│                 │
└ ─ ─ ─ ─ ┬ ─ ─ ─ ┘
         │
         ▼
┌ ─ ─ ─ ─ ─ ─ ─ ─ ┐
│  Estimate lower │
│    bound of     │
│  number of TX   ╲─── 307
│    antennas     │
└ ─ ─ ─ ─ ┬ ─ ─ ─ ┘
         │
         ▼
┌ ─ ─ ─ ─ ─ ─ ─ ─ ┐
│   Re-estimate   │
│    channels     ╲─── 308
│                 │
└ ─ ─ ─ ─ ┬ ─ ─ ─ ┘
         │
         ▼
┌ ─ ─ ─ ─ ─ ─ ─ ─ ┐
│  Detect system  │
│   information   ╲─── 310
│                 │
└ ─ ─ ─ ─ ┬ ─ ─ ─ ┘
         │
         ▼
┌ ─ ─ ─ ─ ─ ─ ─ ─ ┐
│     Perform     │
│    handover     ╲─── 311
│                 │
└ ─ ─ ─ ─ ─ ─ ─ ─ ┘
```

Fig. 3

Receive
broadcasted
signal ⟍ 400

↓

Estimate
channel(s) ⟍ 402

↓

Apply channel
estimate(s) ⟍ 403

↓

Determine joint
log-likelihood ⟍ 404

↓

Maximise joint
log-likelihood ⟍ 405

↓

Estimate
frequency error ⟍ 406

↓

Estimate lower
bound of
number of TX
antennas ⟍ 407

↓

Re-estimate
channels ⟍ 408

↓

Detect system
information ⟍ 410

↓

Perform
handover ⟍ 411

Fig. 4

500

Lower bound of number of TX antennas estimator
513

R

Receiver
502

Frequency error estimator
511

Δ

Pre-coding vector estimator
504

Channel estimator
506

Detector
508

503

510

Fig. 5

500

Processor
602

Memory
608

Higher layer circuitry
600    604

User interface
606

Fig. 6

700

702

Fig. 7

# EP 2 086 190 B1

## REFERENCES CITED IN THE DESCRIPTION

### Patent documents cited in the description

- WO 2007106980 A

### Non-patent literature cited in the description

- **MOTOROLA.** Proposal for Dedicated Pilots in Downlink Precoding for EUTRA MIMO. *3rd Generation Partnership Project, Technical Specification Group Radio Access Network Working Group 1, meeting #48,* 12 February 2007